# EUROPEAN PATENT APPLICATION

(11) **EP 4 811 318 A1**
(43) Date of publication of application: **23.09.2026**
(21) Application number: 25165238.4
(22) Date of filing: 21.03.2025
(51) Int. Cl.: G07C 9/00, G07C 9/25, G07C 9/28, G07C 9/29, H04W 12/06

(54) **SYSTEM AND METHOD FOR SECURE ACCESS CONTROL USING MOTIONBASED AUTHENTICATION AND ENVIRONMENTAL VERIFICATION**

(71) Applicant: UAB "Smart door electronics", 44244 Kaunas (LT)
(72) Inventor: Raskauskas, Eimantas, Kaunas (LT)
(74) Representative: Metida

(57) **Abstract**

The invention provides a system and method for secure, intent-based authentication in access control applications, ensuring access is granted only when a user's natural movement and environmental conditions are verified. It prevents relay attacks and position spoofing by integrating motion trajectory analysis with wireless signal authentication. The system includes a user device (smartphone or wearable) equipped with inertial sensors (accelerometer, gyroscope, barometer) and short-range wireless communication (BLE, UWB). It interacts with external and internal stationary devices at the access point, which facilitate wireless authentication and environmental verification. A processing unit evaluates movement patterns and signal data to define an authentication signature. The method involves detecting and verifying a user's motion trajectory and environmental conditions while approaching an access point. By ensuring authentication signals alone are insufficient, the invention enhances security and user convenience, particularly in hands-free access control environments, effectively preventing unauthorized access.

## Description

### FIELD OF THE INVENTION

The invention relates to access control and authentication systems, focusing on secure, intent-based authentication users motion trajectory environmental conditions analysis and wireless communication technologies. It enhances security by verifying a user's natural movement and environmental conditions, preventing relay attacks and unauthorized access. The system applies to physical access points, ensuring authentication is based on real-world user behavior rather than traditional credentials like PINs or keycards.

### BACKGROUND OF THE INVENTION

Modern access control systems rely on short-range wireless authentication methods, such as BLE, UWB, and RFID, as well as location-based technologies like GNSS. However, these systems face growing security challenges, including relay attacks, signal interception, and position spoofing, which allow attackers to bypass authentication mechanisms. Bluetooth Low Energy (BLE) is a low-power wireless communication technology suitable for continuous authentication, but it is susceptible to interception, as its signals can be captured and retransmitted, spoofing legitimate authentication remotely. And Ultra-Wideband (UWB) is a precise short-range communication technology that enables accurate distance measurement and location tracking with sub-centimeter precision, ensuring proximity verification. UWB, due to its wide frequency spectrum and precise time measurement, is more resistant to attacks, but it is still not completely protected from potential vulnerabilities in the future. GNSS (Global Navigation Satellite System) is a network of satellites that provides global positioning, navigation, and timing information. It allows users to determine their precise location (latitude, longitude, altitude) and track their movement anywhere on Earth. GNSS is used in a wide range of applications, including GPS navigation, mapping, autonomous vehicles, and systems requiring accurate time synchronization. Additionally, conventional authentication methods, such as PIN codes, keycards, and biometrics, often introduce usability and security trade-offs, making it difficult to ensure both seamless access and robust protection against unauthorized entry.

A patent document CN113009463A describes a wireless authentication system that relies on short-range communication technologies (such as BLE, UWB, or RFID) for access control. It primarily focuses on verifying proximity between a user's device and the access point, granting access when the device is detected within a predefined range. Some implementations may include signal strength analysis or time-of-flight measurements to enhance authentication reliability. This system lacks the multi-layered authentication approach, making it less secure and more susceptible to unauthorized access.

EP4283078A1 describes an electric lock control system that performs two stages of determination: first, to check whether a person is within a predetermined region around the lock, and second, to verify whether that person is authorized to unlock the lock based on movement data (e.g., acceleration and magnetic information). This system includes positional, acceleration, and magnetic sensors to assist in the decision-making process for locking and unlocking. This system lacks the comprehensive, multi-layered approach, providing more robust security than the basic proximity-based authentication. The system doesn't integrate methods to prevent relay attacks or position spoofing.

US2015042454A1 describes a smart key system that uses movement pattern recognition of a mobile terminal (such as a smartphone) to unlock a vehicle door. The system continuously transmits position information generated by the mobile terminal as it moves. A control module then acquires this movement data and compares it with a previously stored preset pattern to determine whether to unlock the vehicle. This invention relies on movement patterns from the mobile device alone, without integrating environmental verification or multi-layered authentication.

WO03088157A1 describes a machine vision method for detecting tailgating and reverse entry events in controlled access areas. It relies on stereo cameras and 3D surface analysis to track objects and people, identifying unauthorized entries based on movement patterns. While this system can provide some degree of object tracking and event monitoring, it does not integrate motion trajectory analysis or environmental conditions as the core mechanism for authentication.

WO2023128593A1 describes a service-providing method and system that uses the movement track of a mobile device to determine service content in a target area. The system tracks the device's movement towards the target area using UWB (Ultra-Wideband) positioning and provides services like Bluetooth connections, multimedia services, or IOT services, based on the entry route parameters. However, this invention focuses primarily on service personalization based on movement data and does not integrate environmental conditions or secure intent-based authentication.

The closest prior art WO2023030816A1 describes a method for operating a person separation device using a camera and tracking unit to control access via an automatic door system. It tracks individuals, determines their clearance status through a terminal, and opens or closes doors based on their actions, ensuring that only cleared individuals pass. However, it relies on external actions (e.g., scanning, biometric authentication), and is vulnerable to misidentification or unauthorized access due to the lack of secure, behavior-based authentication.

The prior art documents do not address key security issues such as relay attacks and position spoofing, as they rely on basic motion sensors and proximity detection. They also lack intent-based authentication, making it easier for unauthorized users to bypass the system. To improve security, needs to provide stronger resistance to spoofing and unauthorized access.

### SUMMARY OF THE DISCLOSURE / ESSENCE OF THE INVENTION

The invention provides a system and method for secure, intent-based authentication in access control applications, ensuring that access is granted when a user's natural movement and environmental conditions are verified. Unlike traditional methods relying only on PIN codes, keycards, or biometric scans, this invention prevents relay attacks and position spoofing by integrating motion trajectory analysis with wireless signal authentication.

The invention provides a secure authentication system for controlling access to a predefined entry point. The system comprises a user device (such as a smartphone or wearable) equipped with inertial sensors (accelerometer, gyroscope, barometer) and short-range wireless communication technologies (BLE, UWB). It includes means for detecting the motion trajectory and movement characteristics using these sensors, and means for validating environmental conditions, such as pressure differences detected by the barometer. A means for enabling wireless communication for authentication by determining whether the user is near the external access point/entry point. Processing unit processes data from all components, evaluating the user's movement patterns and signal data to define a unique authentication signature for granting access. The system effectively prevents relay attacks and position spoofing by ensuring access is based on the user's movement and environmental data.

The method involves detecting and verifying a user's motion trajectory and environmental conditions while approaching an access point. The system continuously analyzes motion patterns and wireless signal characteristics, ensuring that authentication occurs only in the correct physical environment. If the detected movement signature and environmental data match the predefined authentication criteria, access is granted, unlocking the door or other controlled entry points.

By integrating motion-based authentication with wireless short range communication authentication signals, the invention ensures that authentication signals alone are insufficient, reducing the risk of unauthorized access. This approach enhances security and user convenience, particularly in environments requiring seamless, hands-free access control while maintaining strong protection against relay attacks and position spoofing.

### BRIEF DESCRIPTION OF THE DRAWINGS

Fig. 1. Shows a schematic view of the main elements of described authentication system.
Fig. 2 shows a view of the user's path towards the access point.

### List of reference signs:

A - means (for detecting motion trajectory and character of movement);
B - means (for validating environmental conditions);
C - means (for performing short-range wireless technologies);
D - processing unit;
E - means (for unlocking the access at the access area / entry point);
1. - external stationary device (ESD);
2. - internal stationary device (ISD);
3. - user mobile device (UMD);
4. - stairs;
5. - staircase below;
6. - staircase at the top;
7. - users path;
8. - access point / entry point.

### DETAILED DESCRIPTION OF THE INVENTION

The present invention provides a secure authentication system and method for access control applications. It ensures that access to a predefined area or entry point (8) is granted based on a multi-layered verification process, which includes motion trajectory analysis and environmental validation. The system leverages advanced inertial sensors (e.g., accelerometer, gyroscope, barometer) and wireless communication technologies (BLE, UWB) to authenticate the user based on their natural movement patterns and physical presence within the predefined access area / entry point (8) environment. Unlike traditional access control methods that rely on PIN codes or keycards, and traditional cryptographic authentication, this invention integrates additional layers of protection - user movement authentication and environmental data to offer enhanced security and prevent unauthorized access through techniques such as relay attacks during which authentication signals are illegally intercepted and remotely retransmitted, or position spoofing.

This invention is applicable in various fields where reliable physical presence verification is required, including access control systems, secure authentication procedures, other contextual identification solutions and hands-free access is needed. By using motion analysis in conjunction with wireless signals, it is possible not only to prevent remote authentication data tampering but also to accurately assess the user's intent to access point / entry point (8) such as homes, offices, factories, and warehouses allowing people to enter without keys or cards (e.g., door, gate, etc.).

For a better explanation of the essence and characteristics of the invention, the detailed description of the system and method for secure access control using motion-based authentication and environmental verification are described as the examples. It should be understood that numerous specific details are presented to provide a complete and comprehensible description of the invention embodiment. However, the person skilled in the art will understand that the embodiment examples do not limit the application of the invention, which can be implemented without these specific instructions.

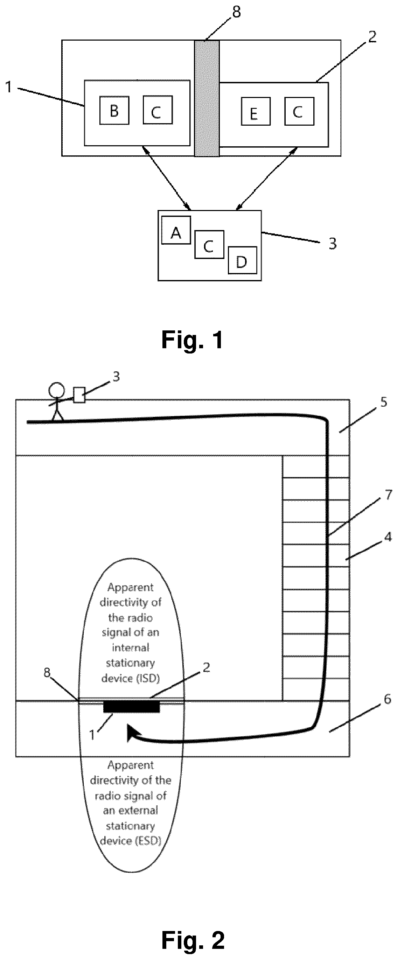

The authentication system relies on motion trajectory analysis by means (A) and validation of environmental conditions by means (B). This analysis integrates data from inertial sensors and wireless signal measurements performed by means (C). All parameters are evaluated in real-time by a processing unit (D), ensuring synchronized authentication based on both movement and environmental conditions. These components are supported by algorithmic modules that enhance the system's ability to learn and authenticate users' movement. These modules are integrated within the processing unit (D), ensuring that data is collected, analyzed, and compared in real-time for seamless authentication Fig.1.

Means (A) for detecting motion trajectory and character of movement could be the user mobile device (UMD) (3) (for example: mobile phone or smart watch) which incorporates multiple sensors parameters to generate a motion signature within the environment, like:
an accelerometer which measures acceleration forces and detects changes in velocity, tracking movement, orientation, and vibration;
a gyroscope which measures angular velocity, detecting rotation and tilt for precise orientation tracking;
barometer which measures atmospheric pressure to detect altitude changes and enhance location accuracy;
a magnetometer which measures magnetic fields, acting as a digital compass to determine user mobile device (UMD) (3) orientation relative to the Earth's magnetic north also measures the strength of the magnetic field, which varies depending on the environment (for example, in an elevator, where ferromagnetic materials partially shield the Earth's magnetic field, reducing its strength);
barometer which measures atmospheric pressure by detecting changes in air pressure, which can be used to estimate altitude or detect weather changes, as atmospheric pressure decreases with elevation.

The movement signature depends on environment such as vehicle motion, step dynamics, the sequence of turns, pressure changes, and the radio signal characteristics of external stationary devices (ESD) (1) and internal stationary devices (ISD) (2). These movements are closely tied to the access point / entry point (8) environment elements like roads, paths, turns, hallways, elevators, stairs (4) and staircases (5, 6) (Fig. 2). For example:
external house door - the access control environment includes paths and roads along which the user moves toward the door, avoiding permanent obstacles such as walls, stairs, or other barriers that form a natural trajectory in the environment;
house inner door - the access control environment may include a staircase, where the user moves up or down the stairs, uses an elevator, or navigates turns in hallways;
gate - the access control environment includes driveways, intersections, and maneuvering areas leading to the gate. This environment forms clear trajectories along which the user moves with a vehicle toward the access point.

Routes of the user in the access area - refers to the user's movement path (7) that lead to the access point (8), either on foot or by vehicle. These routes encompass the natural movement trajectory of the user within the access control environment. The user can reach the access point (8) via different routes, so the number of possible trajectories is limited, but not the only one. The same trajectory may vary depending on whether the user is walking or using a vehicle. When traveling without steps, such as in a car or other transport, GNSS is used, but it is cross-checked with inertial sensors to detect potential GNSS spoofing. When walking, paths, stairs (4), or turns may be used, while when using a vehicle, roads, intersections, and driveway zones are involved. Each path taken by the user becomes an essential part of the user's movement signature, which the system uses for identification and security.

As a result, replicating this movement sequence in a different environment would be extremely complex or nearly impossible, adding a layer of security by ensuring the user's presence is genuine and context-specific, further enhancing the system's resistance to attacks like relay attacks or position spoofing.

Additionally means (B) for validating environmental conditions (e.g., barometer for pressure differences), absolute atmospheric pressure is compared between the external stationary device (ESD) (1) and the UMD (3) obtained parameters as an additional verification layer. Since atmospheric pressure remains consistent at the same elevation, this parameter confirms the user's presence within the predefined access area / entry point (8) environment. Measure and collect the signal strength and distance of the accelerometer, gyroscope, barometer and both stationary devices (1, 2).

Means (C) for performing short-range wireless technologies (BLE and / or UWB) for authentication, facilitate proximity-based authentication, using pre-defined unique cryptographic keys, confirming that the user's mobile device (UMD) (3) is within the designated access environment while maintaining operation.

The processing unit (D) is a component in the system, for example integrated in UMD (3) and responsible for processing and analyzing the data received from the various means (A, B, C). It integrates signals from inertial sensors, which include data from the accelerometer, gyroscope, barometer, and magnetometer, as well as the wireless signal measurements from the external stationary device (ESD) (1) and internal stationary device (ISD) (2).

At this stage, the user's presence on the outer side of the access point (8) is detected by continuously monitoring the changes in BLE signal strength (RSSI) on the user's device (UMD) (3), which collects data from devices (ESD) (1) and (ISD) (2). As the user approaches the access point (8), both signals change dynamically, increasing in strength as they near the access point (8). Processing unit (D) in (UMD) (3) analyzes these changes, evaluates the signal dynamics, and compares it with pre-trained signal dynamics.

Barriers and reflective objects in the access control environment can create a nonlinear relationship between BLE signal strength changes (RSSI) and the user's trajectory and approach path - users path (7). Therefore, the dynamics of the signal change vary depending on the environment. Correlation analysis between the BLE signal strength changes (RSSI) and the user's steps, compared with pre-trained models, enables accurate detection of the user's approach.

The processing unit (D) performs real-time signal processing, ensuring that all data is synchronized on the same time scale. This is essential for analyzing the motion trajectory - users path (7) and the environmental conditions together to accurately identify the user's movement signature within the access-controlled area. By combining the signals, the processing unit (D) is able to evaluate whether the user's behavior matches a predefined, authenticated movement pattern (path signature) that corresponds to the physical proximity of the access point / entry point (8).

Processing unit (D) uses path signature learning module (PSLM) to train the system when a new path signature is detected. Once a new signature is identified, the user is prompted to confirm it, allowing the system to store the pattern for future comparisons. This enables the system to learn the unique movement sequence associated with each user's access behavior.

Adaptive learning allows processing unit (D) in (UMD) (3) to continuously adapt to new user movement trajectories by monitoring and comparing the user's movement signatures with previously learned ones. If the device detects an approach to the access point that does not match any stored movement signatures, it halts the automatic unlocking process and prompts the user with the following query:
"Confirm unlocking?"
"Would you like to add this trajectory to the learning process?"

Once the user confirms, the new trajectory is saved into the allowed movement signatures database, enabling the system to learn and adapt this new data for future use.

Path signature collection module (PSCM) located in the user mobile device (UMD) (3), collects data on the user's movement patterns and environmental parameters. This includes information from inertial sensors (e.g., accelerometer, gyroscope, barometer, magnetometer) and wireless signal measurements. The collected data is sent to the processing unit (D) for analysis and integration with other system components.

In this stage users action classification is essential for accurately recognizing and comparing its movement signature, as classified actions allow for faster analysis and comparison of different movement sequences. The classification includes actions such as walking straight, turning left or right, climbing up or descending stairs, vertical movement in an elevator, and horizontal movement by vehicle. This is not an exhaustive list - the classification can be extended and refined based on collected data and new movement patterns.

Before presenting the data to the classifier, it is necessary to filter the data, removing irrelevant sensor signal noise such as hand swings (when user mobile device (UMD) (3) is held in hand), leg swings (when user mobile device (UMD) (3) is in a pocket), or vibrations, while preserving essential movement data.

The classification is performed using an algorithmic method. This method is fast and efficient in real-time, suitable for resource-limited devices (e.g., smartwatches). The drawback is its lower adaptability to more complex situations.

Actions can also be classified using machine learning (ML) methods, such as neural networks. For instance, long short-term memory (LSTM) networks are particularly suitable for time-series data analysis and classification. A pre-trained and optimized general model could effectively evaluate more complex action sequences. Classification can be performed using algorithmic methods, which are optimized for real-time execution and are suitable for resource-constrained devices (e.g., smartwatches). These methods are computationally efficient but may have limited adaptability to more complex scenarios.

Alternatively, classification can be achieved using machine learning (ML) techniques, such as neural networks. For example, long short-term memory (LSTM) networks are well-suited for analyzing and classifying time-series data. A pre-trained and optimized general model could enhance the recognition of complex action sequences. While ML-based solutions typically require more computational resources and energy, advancements in hardware and optimization techniques enable their deployment even on constrained devices.

When there are pre-trained trajectories, it is possible to compare a segment of the user's movement trajectory with pre-trained trajectories. All trajectories are reversed in time, so the most recent actions (those recorded closest to the access point) appear first in the sequence, while the oldest actions are at the end. The system has a set of pre-trained trajectory sequences used for comparison. Each trained sequence reflects a specific, allowed user movement model.

When a new user trajectory sequence is captured, it is compared with the pre-trained trajectories. During the comparison, the following checks are made:
Which actions are missing compared to the trained sequence?
Which actions are excessive, i.e., not found in the trained sequence?

Each excessive action has a greater significance weight, depending on the type of action. Critical actions (e.g., turns or altitude changes) carry a higher significance weight than regular steps. Additionally, actions further from the access point (8) are given less weight compared to those closer to the access point (8), as the last actions of the user are the most critical for accurately confirming their intent to enter.

Atmospheric pressure comparison by the processing unit (D) in the user's device (UMD) (3) determines if it is at the same elevation as the ESD (1) at the access point (8). This ensures accuracy and helps prevent location spoofing. Calibration is performed as the user approaches the access point (8).

The processing unit (D) applies algorithms to detect patterns in the motion trajectory - users path (7) and environmental data, considering factors such as altitude (via barometric pressure), proximity (via wireless signal strength), and movement characteristics. This allows the unit (D) to continuously analyze data from the user mobile device (UMD) and determine the user's path to the door by comparing it with stored reference data. This ensures that the user's physical presence and users' motion behavior meet the expected access requirements in the environment. Once the processing unit (D) confirms that all parameters meet the authentication criteria, it sends a signal to means (E) to grant access, unlocking the access point/entry point (8).

Cryptographic authentication with AES-256 keys are pre-configured in devices ESD (1), ISD (2), and UMD (3). Authentication is carrefour ied out based on the Challenge-Response principle to ensure that devices ESD (1) and ISD (2) are authentic and that the message content is never repeated.

Process flow:
In UMD (3) is generated a 32-byte random value UMD (3) (random data) and send it to devices ESD (1) and ISD (2).

Devices ESD (1) and ISD (2), using their pre-configured keys, calculate a hash of random value UMD (3) and return the result to UMD (3).

UMD (3) checks if the received hash results match its own calculations. If they match, the authentication is considered successful.

Along with the hash result, devices ESD (1) and ISD (2) send their random value ESD (1) and ISD (2).

Unlock command: UMD (3) calculates the hash of random value ISD (2) and sends it along with the unlock command, ensuring that each command is unique and non-repetitive.

The keys in devices ESD (1) and ISD (2) are pre-known to UMD (3).

AES keys are never transmitted over the air, ensuring maximum security.

Each message has a unique value, protecting the system against replay attacks.

This cryptographic authentication method ensures secure and dynamic communication between devices, enhancing the overall security of the access control system.

As an example, shown in Fig. 2 user with mobile device (UMD) (3) this could be a smartphone or a smartwatch, with running a specially designed application which has access to sensors such as the accelerometer, gyroscope, magnetometer, barometer, and supports BLE communication access control environment next to access point (8) environment like stairway with stairs (4), staircase below (5), staircase at the top (6).

Outside the access point (8) is the external stationary device (ESD) (1) equipped with a barometer sensor, GNSS sensor, short-range communication (SRC) with (BLE and / or UWB) capabilities for transmitting parameters to the mobile device (UMD) (3) carried by the user that enable to detect and authenticate the user's proximity in users' path (7) and BLE antenna designed with directional focus to be aimed to outer side of access point (8), minimizing signal propagation into the inner (opposite) space.

On the inner side of the access point (8) is an internal stationary device (ISD) (2) with short-range communication (SRC) for communication with the user's device (UMD) (3), measuring signal strength, authentication, and receiving and executing the lock unlocking command. Lock control module, designed to control the lock either digitally or analogically. The BLE antenna in the access point (8) is designed with directional focus to be aimed inward, minimizing signal propagation into the external (opposite) space.

Once the system has learned and stored the path signature, the processing unit (D) using path signature comparison module (PSCM) compares newly collected users' path (7) data in real-time against previously trained signatures. If a match is found, the system confirms the user's intent to access the entry point (8). This process ensures that the motion trajectory and environmental conditions match the expected behavior for accessing the predefined area.

Mobile device (UMD) (3) can send the lock unlocking command via BLE communication, using a cryptographic protocol. Unlocking occurs only when the device confirms the following parameters:
The first authentication layer is successful when the stationary devices (1) and (2) become accessible to the user's device (3) via BLE communication, device (3) confirms the uniqueness by checking the match of cryptographic keys and determines that the user is on the outer side of the access point / entry point (8);
The second authentication layer is successful when the user's movement trajectory has been determined, indicating that the user has physically approached the access point / entry point (8) from the outer side (using data from the accelerometer, gyroscope, magnetometer, barometer, and BLE signal strength Received Signal Strength Indicator (RSSI));
RSSI is a measurement used in wireless communication to quantify the strength of the received signal at the receiver's end. RSSI is commonly used in technologies like Wi-Fi, Bluetooth, and other short-range communication systems (e.g., BLE) to assess the quality and range of the connection.

In the context of authentication, RSSI can help determine the proximity of the user's device to a specific point, such as an access point (8), by measuring the signal strength from nearby devices. The stronger the signal, the closer the user's device is to the access point.

The third authentication layer is successful when the user's device (3) checks if the pressure measurement transmitted by external stationary device (ESD) (1) matches its own recorded pressure, thus ensuring that both devices are in the same elevation zone.

Authentication is granted only if the user performs a characteristic movement sequence that matches the specific access environment, providing strong resistance against spoofing and replay attacks. Access is granted through means (E) located on the inner side of the access point (8) after successful identification.

For an attacker to bypass this system using a relay attack, they would need to replicate not only the user's movement trajectory but also environmental parameters, such as atmospheric pressure variations. This would require forcing the legitimate user to unknowingly perform an identical movement sequence while ensuring identical pressure readings at the access point (8). Given the dependency on both motion-based authentication and environmental verification, such an attack is highly complex and practically infeasible.

This system offers an advanced security solution that significantly enhances protection against unauthorized access while providing a seamless user experience.

A method according to this system provides a secure authentication process for access control systems, ensuring that only authorized users can access a predefined area or entry point (8). The method combines motion trajectory analysis, environmental validation, and short-range wireless communication to authenticate users based on their unique movement patterns and physical presence. It leverages sensors such as accelerometers, gyroscopes, barometers, and wireless technologies like BLE or UWB to ensure accurate and reliable authentication, enhancing security against unauthorized access, relay attacks, and position spoofing.

The method begins by collecting data from the user's mobile device (UMD) (3), which is equipped with multiple sensors including:
accelerometer: measures acceleration forces, detecting movement and changes in velocity, tracking the user's steps and vibrations;
gyroscope: detects angular velocity, enabling precise tracking of rotation and orientation;
magnetometer: acts as a digital compass, determining the user's orientation relative to Earth's magnetic north;
barometer: measures atmospheric pressure to detect altitude changes, providing additional location verification.

The data collected from these sensors, such as step dynamics, orientation, pressure changes, and positioning, helps form the user's movement signature. This movement signature includes information on the user's trajectory as he approaches the access point (8).

Once the data is collected from the user's mobile device (UMD) (3), it is transmitted to the processing unit (D), which is responsible for analyzing this data in real-time. The processing unit (D):
analyzes motion trajectory by comparing it with stored movement signatures, ensuring that the user's movement matches previously learned behaviors;
evaluates the dynamic data from the sensors, including changes in velocity (from the accelerometer), orientation (from the gyroscope), atmospheric pressure (from the barometer), and positioning (from the magnetometer), to authenticate the users path;
ensures that the data is synchronized, evaluating all parameters in real-time to make an informed decision about granting access.

Then the system uses means (B) to validate environmental conditions and confirm that the user is in the correct environment. Specifically:
atmospheric pressure comparison between the user's mobile device (UMD) (3) and the external stationary device (ESD) (1) located at the access point (8) ensures that both devices are at the same elevation.

This is achieved by comparing the atmospheric pressure readings from both devices. Since atmospheric pressure decreases with altitude, matching readings confirm the user's proximity and presence in the correct area.

This step prevents location spoofing by ensuring that the user's device is in the designated environment and elevation zone.

The system uses short-range wireless communication (SRC) to authenticate the user. This involves communication between devices using technologies like BLE (Bluetooth Low Energy) or UWB (Ultra-Wideband) for proximity detection.

The external stationary device (ESD) (1) and internal stationary device (ISD) (2) communicate with the user's mobile device (UMD) (3) through BLE or UWB, establishing the proximity of the user to the access point (8).

Signal strength measurements (e.g., RSSI) are taken and compared to verify that the user's device is within the designated access area (8).

The communication is secured with cryptographic keys to prevent unauthorized interception and tampering.

The processing unit (D) performs real-time data processing to ensure that the movement trajectory and environmental conditions are synchronized and evaluated accurately. This includes combining data from the sensors and wireless communication devices to evaluate the user's movement trajectory (user's path (7)) and environmental conditions.

Signal processing algorithms are employed to assess whether the user's behavior matches the expected trajectory and confirms their physical proximity to the access point (8).

If the parameters match, the system proceeds to grant access; if not, it will prompt the user to confirm the unlocking or denying access.

The system continuously learns from the user's movements, adapting to new patterns of behavior. This is done by using the path signature learning module (PSLM) integrated into the processing unit (D).

As new movement trajectories are detected (e.g., different access routes), the system compares them to pre-trained patterns to determine if they match.

User confirmation is requested when a new trajectory is detected, prompting the user to confirm if the system should learn the new pattern. Once confirmed, the system stores the trajectory for future comparisons.

As the system learns, it adapts to the user's access behavior over time. This process includes continuous monitoring and comparing the user's movement data with previously learned patterns.

Adapting to changes in user behavior, such as when the user takes a new route or changes their typical movement pattern, ensuring the system remains accurate.

New paths and routes that match the user's behavior are added to the system's database, ensuring ongoing security and reducing the likelihood of unauthorized access.

Once the processing unit (D) has validated the user's behavior and environmental conditions the system sends a signal to means (E) (e.g., an unlocking mechanism) to grant access to the predefined access area / entry point (8).

Unlocking occurs only if the user has passed all authentication layers, including motion trajectory analysis, environmental validation, proximity detection, and cryptographic authentication.

Access is granted based on the user's verified intent to access the area, as indicated by their physical movement and contextual data.

The system is designed to resist relay attacks and position spoofing by ensuring that both motion-based authentication and environmental verification are required before access is granted.

This multi-layered verification system ensures that only the legitimate user, with the correct movement patterns and physical presence, can gain access.

Once the user is successfully authenticated, the system sends a lock unlocking command to the locking mechanism (means E), allowing the user to access the predefined area.

Each authentication action is unique, and the system prevents replay attacks by ensuring that all messages are non-repetitive and protected by secure cryptographic protocols.

This method integrates advanced techniques, including motion trajectory analysis, environmental validation, proximity-based authentication, and machine learning, to create a highly secure access control system. It ensures a seamless user experience while maintaining strong defenses against unauthorized access attempts. The system is adaptable to user behavior changes, continuously learning and improving security.

## Claims

1. A system for secure authentication and access control to a predefined access area / entry point (8), comprising:
means for scanning and collecting user data;
means for processing the mentioned user's data to make a decision for granting an access;
means for unlocking the access to the entry point (8) upon successful authentication;
**characterized in that** the system comprises the following components:
means (A) for detecting motion trajectory and character of movement (e.g., using accelerometer, gyroscope, and magnetometer);
means (B) for validating environmental conditions (e.g., using a barometer for detecting pressure differences);
means (C) for performing short-range wireless communication (e.g., using BLE and / or UWB for authentication);
processing unit (D) for signals processing from all mentioned means together to enable to define the appropriate pattern of the user, recognizing its movement signature ensuring proper authentication and safety assurance against
unauthorized access;
in such a way the user can grant access relying solely on its unique movement signature and environmental authentication, and the system ensures relay attack prevention and position spoofing resistance.

2. The system according to claim 1, **characterised in that** the means (A) for detecting motion trajectory and character of movement, is incorporated in a user's mobile device (UMD) (3) equipped with an accelerometer, gyroscope, magnetometer, and barometer, enabling the detection of the user's movement trajectory and corresponding changes in velocity, orientation, pressure, and positioning.

3. The system according to any of claims 1, 2, **characterised in that** the means (B) for validating environmental conditions includes a barometer for measuring atmospheric pressure and ensuring that the user's mobile device (UMD) (3) is within the predefined access area (8) and confirming the user's elevation through atmospheric pressure comparison.

4. The system according to claim 3, **characterised in that** predefined access area (8) comprises an external stationary device (ESD) (1) and internal stationary device (ISD) (2).

5. The system according to any of claims 1-3, **characterised in that** the means (C) for performing short-range wireless technologies utilizes BLE (Bluetooth Low Energy) or UWB (Ultra-Wideband) for proximity-based authentication, enabling secure communication at entry point (8) between the external stationary device (ESD) (1), internal stationary device (ISD) (2), and the users mobile device (UMD) (3), using pre-configured cryptographic keys for security.

6. The system, according to any of claims 1-5, **characterised in that** the unit (D) performs real-time signal processing, ensuring that data from mentioned sensors and wireless communication devices is synchronized and analyzed in real-time, enabling accurate and timely authentication decisions.

7. The system, according to claim 6, **characterised in that** the unit (D) further includes an algorithmic learning module (PSLM) for continuously learning the user's movement behavior, wherein the module stores newly detected movement patterns and integrates them into the system, adapting the authentication process to new access routes as they are learned.

8. The system according to claim 7, **characterised in that** the algorithmic learning module (PSLM) comprises: means for prompting the user to confirm newly detected movement trajectories, thus allowing the system to add valid new movement patterns to its database for future comparison and use in authentication, ensuring continuous system adaptation.

9. A method for secure authentication and access control to a predefined access area / entry point (8), comprising the steps of:
scanning and collecting user data;
processing the collected user data to make a decision for granting access;
unlocking the access to the entry point (8) upon successful authentication;
**characterised in that** the method comprises the following steps:
detecting motion trajectory and character of movement (e.g., using accelerometer, gyroscope, and magnetometer) through means (A);
validating environmental conditions (e.g., using a barometer to detect pressure differences) through means (B);
performing short-range wireless communication (e.g., using BLE and / or UWB for authentication) through means (C);
processing signals from all the mentioned means together via a processing unit (D), to define the appropriate pattern of the user, recognizing its movement signature, and ensuring proper authentication and safety assurance against unauthorized access;
granting access based on the user's unique movement signature and environmental authentication, ensuring the prevention of relay attacks and resistance to position spoofing.

10. The method according to claim 9, **characterised in that** the step of detecting motion trajectory and character of movement is performed by incorporating means (A) into a user's mobile device (UMD) (3), which is equipped with an accelerometer, gyroscope, magnetometer, and barometer, enabling the detection of the user's movement trajectory and corresponding changes in velocity, orientation, pressure, and positioning.

11. The method according to any of claims 9, 10, **characterised in that** the step of validating environmental conditions includes using a barometer to measure atmospheric pressure and ensuring that the user's mobile device (UMD) (3) is within the predefined access area (8), and confirming the user's elevation through the comparison of atmospheric pressure between the devices at the access point (8).

12. The method according to any of claims 9-11, **characterised in that** the step of performing short-range wireless communication utilizes BLE (Bluetooth Low Energy) and / or UWB (Ultra-Wideband) technologies for proximity-based authentication, enabling secure communication at entry point (8) between the external stationary device (ESD) (1), internal stationary device (ISD) (2), and the user's mobile device (UMD) (3), using pre-configured cryptographic keys for secure authentication.

13. The method according to any of claims 9-12, **characterised in that** the step of processing signals from sensors and wireless communication devices is performed in real-time by the processing unit (D), ensuring that the collected data is synchronized and analyzed promptly, enabling accurate and timely authentication decisions.

14. The method according to any of claims 9-13, **characterised in that** the step of continuously learning the user's movement behavior is performed by an algorithmic path signature learning module (PSLM) in the processing unit (D), wherein newly detected movement patterns are stored and integrated into the system, adapting the authentication process to new access routes as they are learned.

15. The method according to claim 14, **characterised in that** the algorithmic path signature learning module (PSLM) further comprises the step of prompting the user to confirm newly detected movement trajectories, thus allowing the system to add valid new movement patterns to its database for future comparison and use in authentication, ensuring continuous system adaptation.
